# FASCICULE DE BREVET EUROPEEN

(11) **EP 3 710 896 B1**
(45) Date de publication et mention de la délivrance du brevet: **22.09.2021**
(21) Numéro de dépôt: 18839713.7
(22) Date de dépôt: 14.12.2018
(51) Int. Cl.: G04B 39/00

(54) **GLACE DE MONTRE**
ABDECKGLAS FÜR UHR
COVER GLASS FOR WATCH

(30) Priorité: 19.12.2017 CH 15502017
(43) Date de publication de la demande: 23.09.2020
(73) Titulaire: Guenat SA Montres Valgine, 2345 Les Breuleux (CH)
(72) Inventeur: BOILLAT, Julien, 2350 Saignelégier (CH); PERRIN, Charles, 2350 Saignelégier (CH); CHHEU, Tay, 2606 Corgémont (CH)
(74) Mandataire: P&TS SA (AG, Ltd.)
(86) Numéro de dépôt international: PCT/IB2018/060110
(87) Numéro de publication internationale: WO 2019/123172

(56) Documents cités:
- JP-A- 2004 093 437
- JP-A- 2005 274 527
- JP-A- 2010 038 676
- US-A1- 2015 355 380

## Description

### Domaine technique

La présente invention concerne une glace de montre, une boite de montre et une montre comprenant une telle glace, et un procédé de fabrication d'une telle glace.

### Etat de la technique

En horlogerie, le mouvement de montre est logé dans une boite qui isole le mouvement de l'extérieur, d'une part par le fond de la boite et par la glace d'autre part.

On connait des glaces de montre en matière synthétique, par exemple plastique, qui, grâce aux propriétés élastiques du matériau synthétiques, sont engagées dans la boite par déformation élastique de la glace. Cependant, les glaces en plastiques ont une faible résistance à l'usure et aux rayures, ce qui limite leurs utilisations dans le temps.

Pour améliorer la résistance des glaces synthétiques, on connait des glaces synthétiques multicouches où au moins une couche est durcie par exposition aux rayonnements UV. Par exemple, le document CH705592 décrit une glace de montre multicouche formée par injection de différents polymères dans un moule. La glace comprend un corps de base recouverte par injection d'une couche de second matériau pour former un corps intermédiaire, par exemple un corps de base en polyméthacrylate recouverte de polyméthacrylate de méthyle ou de polyacryl. Après injection du second matériau, le corps intermédiaire est irradié par un rayonnement UV pour durcir spécifiquement la couche de second matériau. Après durcissement, la glace est libérée du moule par déformation du moule.

Alternativement, on connait aussi des glaces de montre à base de matière inorganique, par exemple de l'oxyde l'aluminium sous forme amorphe appelé corindon, ou cristallin appelé saphir. Ce type de matériau est utilisé pour sa dureté et sa résistance aux rayures. Pour la plupart des utilisations, les glaces en oxyde d'aluminium, sous forme amorphe ou cristalline, présentent une résistance aux rayures et aux chocs suffisants.

Dans certaines utilisations extrêmes, lorsque la glace est soumise à des chocs très violents, par exemple lors de match de polo lors de chocs entre joueurs, les glaces saphir existantes n'ont pas une résistance suffisante. En effet, lorsque le choc dépasse la résistance de la glace saphir, la glace se brise et des éclats se dispersent dans la boite. Dans ce cas, le mouvement n'est plus protégé par la glace ce qui rend la montre inutilisable. Par ailleurs, la projection des éclats dans la boite peut entrainer des dommages irrémédiables sur les pièces du mouvement.

Par exemple, le document JP2005274527 décrit une glace de montre comprenant une monocouche de saphir. La couche de saphir est recouverte d'un film anti réflexion qui peut comprendre par exemple une couche d'oxyde de zirconium entre deux couches d'oxyde d'aluminium. Mais dans ce document les couches d'oxyde d'aluminium du film anti réflexion ne sont pas du saphir, autrement dit de l'oxyde d'aluminium sous forme cristalline. Ainsi, le film anti-réflexion ne permet pas d'améliorer significativement la résistance aux chocs de la glace.

Ainsi, les glaces de montre synthétiques ou à base d'oxyde d'aluminium ne présentent pas une résistance aux chocs suffisante pour des utilisations extrêmes. Il existe un besoin de fournir une glace de montre à la résistance améliorée pour ce type d'utilisation.

### Bref résumé de l'invention

Un but de la présente invention est de proposer une glace de montre exempte ou qui minimise les limitations des glaces de montre connues.

Selon l'invention, ces buts sont au moins partiellement atteints au moyen d'une glace de montre destinée à être fixée sur une boîte de montre bracelet, la glace comprenant un laminé de matériau, ledit laminé comprenant :
- un premier substrat et un deuxième substrat, ledit premier substrat et ledit deuxième substrat étant à base d'oxyde d'aluminium sous forme cristalline, le deuxième substrat étant superposé sur le premier substrat, le deuxième substrat étant destiné à faire face au porteur de montre lorsque la glace est montée dans une boite de montre ;
- une couche intermédiaire logée entre ledit premier substrat et ledit deuxième substrat, ladite couche intermédiaire permettant de coller le premier substrat sur le deuxième substrat.

Cette solution présente notamment l'avantage par rapport à l'art antérieur de fournir une glace qui résiste à des chocs très violents. La glace selon la présente invention absorbe les chocs extrêmes sans se briser ce qui évite une dispersion des bris de glace dans la boite.

Le laminé de la glace selon la présente invention comprend un laminé avec au moins deux couches, deux substrats appelés premier substrat et deuxième substrat, le premier substrat et le deuxième substrat étant superposés, c'est-à-dire l'un sur l'autre. Lorsque la glace est fixée sur une boite de montre, le premier substrat est entre le cadran (ou le mouvement pour une montre squelette) et le deuxième substrat, le deuxième substrat faisant face au porteur de montre.

Le premier substrat et le deuxième substrat sont à base d'oxyde d'aluminium sous forme cristalline. Dans la forme cristalline, les molécules d'oxyde d'aluminium Al₂O₃ sont disposées en une structure organisée dite cristalline, ce qui n'est pas le cas de la forme amorphe comme dans le corindon ou dans d'autres matériaux comprenant des particules d'oxyde d'aluminium dispersées dans le matériau.

De préférence, le premier substrat et le deuxième substrat sont majoritairement constitués d'oxyde d'aluminium sous forme cristalline. Le premier et le deuxième substrat peuvent comprendre une proportion d'autres matériaux, mais l'oxyde l'aluminium cristallin reste en proportion majoritaire. Les autres matériaux sont choisis parmi les pigments, par exemple oxyde de titane, oxyde de fer, ou oxyde de cobalt.

Dans un mode de réalisation, le premier substrat et le deuxième substrat peuvent avoir une composition identique ou différente, mais l'oxyde d'aluminium sous forme cristalline reste en proportion majoritaire dans chaque substrat.

De préférence, le premier substrat et le deuxième substrat sont essentiellement constitués d'oxyde d'aluminium sous forme cristalline, à part les impuretés inévitables qui représentent une proportion généralement inférieure à 2% en poids.

Dans le laminé, le deuxième substrat est superposé sur le premier substrat, dans le sens ou le premier substrat est côté cadran lorsque la glace est montée dans une boite de montre comprenant un cadran ; le deuxième substrat est face au porteur de montre lorsque la glace est montée dans une boite de montre.

Dans la glace selon la présente invention, une couche intermédiaire est intercalée entre le deuxième substrat et le premier substrat lorsque le deuxième substrat est superposé sur le premier substrat. La couche intermédiaire permet de coller le premier substrat et le deuxième substrat ensemble, autrement dit cette couche intermédiaire permet de solidariser ou sceller le premier substrat sur le deuxième substrat (et vice versa, i.e. le deuxième substrat sur le premier substrat).

La couche intermédiaire a des propriétés adhésives pour coller le premier substrat sur le deuxième substrat.

La couche intermédiaire peut être un film. Le film peut être sous forme d'une feuille laminée entre le premier et le deuxième substrat. Le film peut être formé en étalant une composition, de préférence visqueuse, sur la face externe du premier substrat.

En cas de chocs violents, mais inférieurs à la capacité de résistance de la glace selon l'invention, la superposition du premier substrat sur le deuxième substrat et la présence d'une couche intermédiaire entre les deux substrats permettent d'assurer l'intégrité de la glace de sorte que la glace absorbe le choc sans se briser : il n'y a pas de bris de glace qui se dispersent dans la boite, contrairement aux glaces saphir existantes qui se brisent en cas de chocs violents, les bris de glace pouvant causer des dommages aux autres composants de la boite, notamment au mouvement.

Lorsque le choc dépasse la capacité de résistance de la glace, seul le deuxième substrat se brise en plusieurs bris ou morceaux, le premier substrat reste intact. Dans ce cas, la couche intermédiaire permet de maintenir les bris du deuxième substrat collés sur la couche intermédiaire et par extension sur le premier substrat. Cela permet d'éviter que des bris ne viennent gripper ou endommager les autres composants contenus dans la boite, comme les indicateurs horaires, le cadran ou les composants du mouvement.

Avantageusement, lorsque seul le deuxième substrat se brise, la boite de montre reste étanche grâce à la couche intermédiaire et au premier substrat qui maintiennent l'étanchéité de la boite de montre.

Dans un mode de réalisation, la glace comprend des moyens d'attachement pour fixer la glace sur une boite de montre, en particulier sur la carrure de la boite de montre. Par exemple, la glace comprend des trous sur une zone périphérique de la glace, chaque trou étant destiné à recevoir une goupille chassée dans le trou et dans la boite de montre ; ou une vis vissée dans la boite de montre.

Selon un mode de réalisation, la couche intermédiaire comprend au moins une feuille de support, autrement dit couche de support, par exemple en vinyle ou en acrylate. La couche intermédiaire est à l'interface entre le premier substrat et le deuxième substrat, autrement dit la couche intermédiaire a une fonction de joint entre le premier substrat et le deuxième substrat. La couche intermédiaire permet également de coller le premier substrat sur le deuxième substrat. Si le deuxième substrat se brise sous l'effet d'un choc violent, la couche intermédiaire retient les bris de deuxième substrat sur le premier substrat.

Dans un mode de réalisation, la couche intermédiaire comprend au moins une feuille d'adhésif, autrement dit une couche adhésive, en résine époxy, acrylate ou vinyle. La couche adhésive permet de renforcer les propriétés d'adhérence de la couche intermédiaire sur les premier et deuxième substrat. Par exemple, la couche (ou feuille) intermédiaire peut être en sandwich entre deux couches (ou feuilles) d'adhésifs. Par exemple la couche adhésive comprend une colle à base d'époxy, notamment un époxy à durcissement par traitement ultra-violet (UV) ou un autre type de colle à durcissement par ultraviolet.

Avantageusement, la couche adhésive peut être une couche de lissage qui permet de lisser fournir une surface lisse sur laquelle la couche intermédiaire vient se coller.

Dans un mode de réalisation, la couche intermédiaire 12 est constituée par une feuille d'adhésif, par exemple à base de résine époxy, de vinyle ou d'acrylate. La feuille d'adhésive peut être un film préparé en étalant une composition adhésive sur la face externe du premier substrat, par exemple une résine époxy de 0.07 mm d'épaisseur après étalement.

Selon un mode de réalisation, la couche intermédiaire comprend au moins une feuille de support et une feuille adhésive, de préférence une feuille de support entre feuilles d'adhésive.

Lorsque la couche intermédiaire comprend une feuille de vinyle ou d'acrylate, ladite feuille à une fonction de feuille de support et de feuille d'adhésif.

Dans un mode de réalisation, la feuille d'adhésif a une épaisseur comprise entre 0.01 mm et 0.30 mm, de préférence entre 0.15 mm et 0.30 mm pour une couche d'acrylate ou de vinyle, de préférence entre 0.05 mm et 0.15 mm pour une couche de résine époxy.

Selon un mode de réalisation, au moins le deuxième substrat est bombé de sorte que la glace présente une surface extérieure bombée, de préférence le premier substrat et le deuxième substrat sont bombés. La face extérieure de la glace est la surface qui fait face au porteur lorsque la glace est montée dans une boite de montre. Le deuxième substrat est bombé, autrement dit galbé ou convexe, la surface externe du deuxième substrat s'étend dans une direction perpendiculaire au plan (x,y) de la glace. Lorsque le deuxième substrat est bombé, cela permet d'améliorer la résistance aux chocs de la glace.

Dans un mode de réalisation, le premier substrat et le deuxième substrat sont bombés, par exemple les faces en contact de chaque substrat sont bombées. De préférence, les faces internes et externes du premier substrat et les faces internes et externes du deuxième substrat sont bombées. Le rayon de courbure de chaque substrat est choisi de façon à permettre que le premier substrat s'emboite dans le deuxième substrat en laissant la place nécessaire à la couche intermédiaire, par exemple la couche adhésive. Ainsi, la fixation du deuxième substrat sur le premier substrat est améliorée, ce qui participe à l'amélioration de la résistance aux chocs de la glace. Lorsque les rayons de courbures des faces bombés des premier et deuxième substrats en contact sont adaptés l'un à l'autre, cela permet d'améliorer la résistance de la glace aux contraintes mécaniques ou thermiques. Par exemple, la glace ne vrille pas lorsqu'on exerce une pression sur le laminé pour monter la glace dans la boite de montre.

Selon un mode de réalisation, la glace est circulaire.

Dans un mode de réalisation, la glace est polygonale, de préférence rectangulaire.

Dans un mode de réalisation, la glace est en forme tonneau.

Dans un mode de réalisation, la glace comprend plus de deux substrats, par exemple trois ou quatre substrats superposés. Dans ce cas, les substrats additionnels aux premier et deuxième substrats peuvent avoir des caractéristiques identiques à celles des premier ou deuxième substrats, ou différentes.

Dans un mode de réalisation, la glace comprend une zone centrale et une zone périphérique, la zone périphérique borde ou entoure la zone centrale, la zone périphérique court le long du pourtour de la glace. Dans un mode de réalisation, la zone périphérique comprend un biseau ou bord oblique sur une des faces latérales de la glace, les faces latérales reliant la face extérieure de la glace à la face intérieure. Par exemple, le biseau présente un angle compris entre 15° et 50°, de préférence entre 20° et 30°, par exemple 25°.

Selon un mode de réalisation, le laminé a une épaisseur comprise entre 1.5 et 5 mm, de préférence entre 1,6 mm et 5 mm, de préférence entre 2 mm et 2.5 mm. La demanderesse a découvert qu'en dessous de 1.5 mm, la glace ne résiste pas aux chocs violents. Ainsi, entre 1.5 et 5 mm, la glace peut absorber des chocs ou impacts plus importants ce qui lui confère une résistance aux chocs est améliorée. Au-delà de 5mm, le rendu esthétique n'est pas satisfaisant, et il est plus difficile de fixer la glace d'une épaisseur supérieure à 5 mm sur une boite de montre. Une épaisseur entre 2 mm et 2.5 mm représente un intervalle qui confère à la fois une résistance satisfaisante aux chocs violents et ergonomie adaptable à une boite de montre.

Dans un mode de réalisation, la glace a une largeur dans un plan (x,y) comprise entre 30 mm et 50 mm et une longueur dans un plan (x,y) comprise entre 30 mm et 50 mm.

Selon un mode de réalisation, le premier substrat et/ou le deuxième substrat a/ont une épaisseur comprise entre 0.4 mm et 2.5 mm, de préférence 0.7 et 2.5 mm, préférentiellement entre 0.5 mm et 0.9, ou entre 0.9 et 1.1 mm ou entre 1.1 mm et 1.3 mm. La demanderesse a observé qu'en dessous de 0.4 mm d'épaisseur par substrat, la glace ne résistait pas aux chocs violents.

En particulier, dans un mode de réalisation, le premier substrat et le deuxième substrat ont une épaisseur de 1.0 mm. Selon un mode de réalisation, le premier substrat et le deuxième substrat ont une épaisseur de 1.2 mm. Ces épaisseurs, 1.0 mm ou 1.2 mm, permettent un excellent compromis entre la robustesse et le poids.

Dans un mode de réalisation, le premier substrat et le deuxième substrat ont une épaisseur comprise entre 0.4 mm et 0.9 mm, en particulier 0.7mm.. Cette plage d'épaisseur permet d'obtenir une glace laminée d'épaisseur équivalente à une glace standard monocouche.

Le premier substrat peut avoir une épaisseur identique ou différente de celle du deuxième substrat.

De préférence, le laminé a une épaisseur comprise entre 2.0 mm et 2.5 mm, le premier substrat et le deuxième substrat ayant une épaisseur comprise entre 0.9 mm et 1.1 mm, le reste de l'épaisseur étant constitué de la couche intermédiaire. En utilisant ce mode de réalisation, la demanderesse a observé des résultats très satisfaisants en termes de résistance aux chocs violents et de protection des composants de la boite de montre, même lorsque le deuxième substrat d'une glace montée dans une boite de montre-bracelet se brise.

Selon un mode de réalisation, le premier substrat et le deuxième substrat comprennent chacun une face externe et une face interne, la face externe du premier substrat étant destinée à être positionnée au regard de la face interne du deuxième substrat dans le laminé de la glace.

Selon un mode de réalisation, le premier substrat et/ou le deuxième substrat est/sont recouvert (s) au moins partiellement d'un revêtement antireflet. Le traitement antireflet permet de minimiser la part de rayonnement lumineux qui est réfléchi, ce qui augmente la part de lumière transmise à travers la glace. Cela permet d'améliorer la visibilité des composants de la boite de montre au travers de la glace. De préférence, la face interne du deuxième substrat et la face externe du premier substrat sont recouvertes d'un revêtement antireflet. Par exemple le traitement antireflet est un traitement antireflet bleu sur la face interne du premier substrat et la face externe du deuxième substrat, appliqué de préférence à une température comprise entre 40° et 110°, par exemple 50° ou 100°.

Dans un mode de réalisation, le premier substrat et/ou le deuxième substrat est/sont au moins partiellement poli(s). De préférence, la face interne du deuxième substrat et la face externe du premier substrat sont polies. Le polissage permet d'éliminer les imperfections de surfaces, pour améliorer le contact entre le premier substrat et le deuxième substrat. Le polissage permet également d'améliorer la transmission de la lumière à travers la glace. De préférence, le polissage est un poli miroir sans rayes, impuretés ou déformations.

Avantageusement, la glace selon la présente invention présente une résistance remarquable à la corrosion, notamment la corrosion du brouillard salin, de la sueur pulvérisée, en chaleur humide. La glace présente également une bonne résistance aux solvants, notamment les solvants organiques de type acétone

La glace selon l'invention présente également une résistance aux agents chimiques et climatiques conforme aux normes NIHS 96-50. Par exemple, cette résistance concerne les chocs thermiques, le rayonnement solaire, les cosmétiques

L'invention concerne également un procédé pour fabriquer une glace de montre destinée à être fixée sur une boite de montre, la glace comprenant un laminé de matériau comprenant un premier substrat superposé sur un deuxième substrat, le procédé comprenant :
i) Fournir un premier substrat et un deuxième substrat, ledit premier substrat et ledit deuxième substrat étant à base d'oxyde d'aluminium sous forme cristalline, le deuxième substrat étant superposé sur le premier substrat, le deuxième substrat étant destiné à faire face au porteur de montre lorsque la glace est montée dans une boite de montre ;
ii) Coller le premier substrat sur le deuxième substrat en intercalant une couche intermédiaire entre le premier substrat et le deuxième substrat.

Selon un mode réalisation, le premier substrat et le deuxième substrat comprennent chacun une face externe et une face interne, la face externe du premier substrat étant destiné à être positionnée au regard de la face interne du deuxième substrat dans le laminé et dans lequel le premier substrat et le deuxième substrat sont bombés, le procédé comprenant, avant l'étape de collage :
- Ajuster la position du premier substrat par rapport au deuxième substrat de façon à ce que la face externe du premier substrat s'emboite dans la face interne du deuxième substrat ;

Lorsque le premier substrat et le deuxième substrat sont bombés, la face externe du premier substrat vient s'emboiter dans la face interne du deuxième substrat. Une fois que la position est ajustée, le premier substrat est collé sur le deuxième substrat. Cela permet de contrôler l'interface entre le premier substrat et le deuxième substrat, par exemple pour s'assurer qu'il existe un contact continu entre les deux substrats, pour éviter les bulles d'air ou les contaminations, par exemple les poussières.

Dans un mode de réalisation, le premier substrat et le deuxième substrat comprennent chacun une face externe et une face interne la face externe du premier substrat étant destiné à être positionnée au regard de la face interne du deuxième substrat dans le laminé, le procédé comprenant, avant l'étape de collage, une étape de polissage comprenant:
- Polir les faces externes et/ou internes du premier substrat et/ou du deuxième substrat;

De préférence, au moins la face interne du deuxième substrat et la face externe du premier substrat sont polies avant le collage pour préparer ces faces avant de poser la couche intermédiaire. Cela permet d'améliorer l'adhérence de la couche intermédiaire et les propriétés optiques, par exemple la transparence visible.

Dans un mode de réalisation, le laminé est délimité par des faces latérales, le procédé comprend :
- une étape de retouche des faces latérales du laminé, par exemple une retouche du biseau d'une des faces latérales lorsqu'une des faces latérales comprend un biseau.

Selon un mode réalisation, le premier substrat et le deuxième substrat comprennent chacun une face externe et une face interne, la face externe du premier substrat étant destiné à être positionnée au regard de la face interne du deuxième substrat dans le laminé, le procédé comprenant, avant le collage ou après le polissage, une étape de traitement comprenant:
- Déposer un revêtement antireflet sur les faces externes et/ou internes du premier substrat et/ou du deuxième substrat;

De préférence, le revêtement antireflet est déposé sur la face externe du deuxième substrat et sur la face interne du premier substrat.

Dans un mode de réalisation, le dépôt du revêtement antireflet sur les faces externes du premier substrat et/ou du deuxième substrat est la dernière étape du procédé, de préférence sur la face externe du deuxième substrat et sur la face interne du premier substrat.

Dans un mode de réalisation, les premier et deuxième substrats ont la même épaisseur. Il est avantageux que les deux substrats aient la même épaisseur. Cela permet d'avoir un comportement homogène des deux substrats quand on exerce une force (pression mécanique, sollicitation thermique) sur le laminé, par exemple pour le montage de la glace dans la boite de montre, pour éviter que le laminé ne vrille.

L'invention concerne également une boite de montre comprenant une glace selon l'invention.

L'invention concerne enfin une montre comprenant une glace selon l'invention.

Dans la présente demande, les termes « chocs ou impacts violents ou extrêmes » définissent des chocs qui vont au-delà de la capacité de résistance d'une glace existante, par exemple une glace synthétique ou une glace comprenant de l'oxyde d'aluminium cristallin ou amorphe.

Dans la présente demande, le terme « laminé » désigne un assemblage de couches, autrement dit un sandwich. Le laminé comprend un premier substrat, un deuxième substrat, et une couche intermédiaire entre ledit premier substrat et ledit deuxième substrat.

Le terme « acrylate » désigne des polymères issus de la polymérisation de monomères acrylates. Le terme acrylate désigne aussi les dérivés méthacrylate.

Le terme « vinyle » désigne des polymères issus de la polymérisation de monomères vinylique.

Le terme « époxy » désigne des polymères issus de la polymérisation de monomères époxy.

Les modes de réalisation décrits pour la glace s'appliquent mutatis mutandis au procédé, à la boite et à la montre selon la présente invention, et vice versa.

### Brève description des figures

Des exemples de mise en œuvre de l'invention sont indiqués dans la description illustrée par les figures annexées dans lesquelles :
La figure 1 illustre une vue générale d'une glace selon un mode de réalisation de l'invention ;
La figure 2 illustre une vue de dessus de la glace de la figure 1 ;
La figure 3 illustre une vue de coupe de la glace de la figure 2 selon l'axe AA' ;
La figure 4 illustre une vue de coupe de la glace de la figure 2 selon l'axe BB' ;

### Exemple(s) de mode de réalisation de l'invention

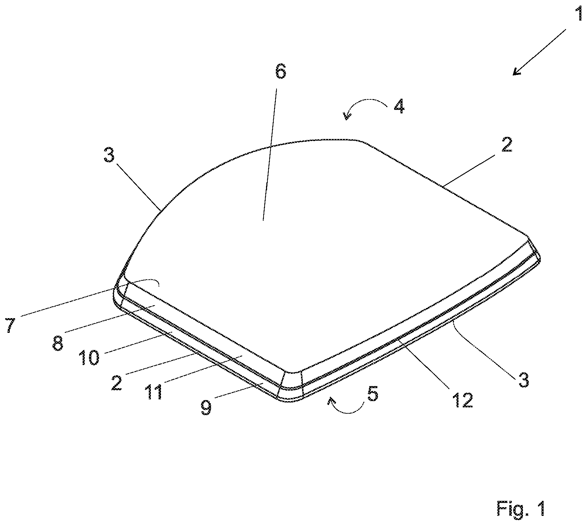

Un mode de réalisation de la présente invention est représenté sur les figures 1 à 4. Ce mode de réalisation est décrit à titre d'exemple et l'invention n'est pas limitée à ce mode de réalisation.

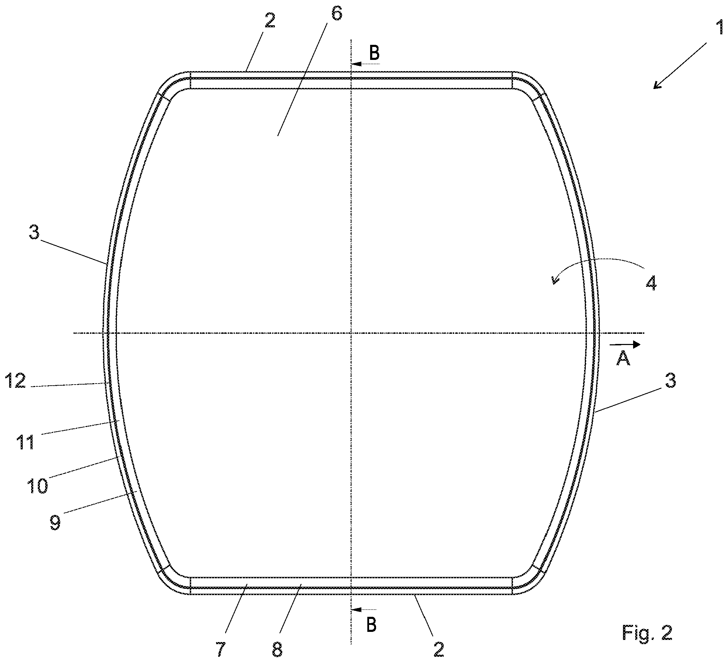

Les figures 1 et 2 représentent des vues générales d'une glace de montre 1 destinée à être fixée sur une boite de montre-bracelet (boite non représentée sur les figures). La glace 1 est de forme tonneau, avec deux bords droits 2 opposés dont chaque extrémité est reliée par deux bords courbes 3. La glace 1 peut aussi avoir une forme ronde ou circulaire dans des modes de réalisations non représentés.

La glace 1 comprend deux faces : une face extérieure 4 opposée à une face intérieure 5, la face intérieure 5 étant reliée à la face extérieure 4 par des faces latérales, ou bords. La face extérieure 4 est face au porteur de montre lorsque la glace 1 est montée dans une boite de montre d'une montre-bracelet sur le poignet d'un utilisateur; alors que la face intérieure 5 est face au fond de la boite de montre (ou face au cadran si la boite comprend un cadran).

La glace 1 comprend une zone centrale 6 bordée d'une zone périphérique 7, la zone périphérique 7 court le long du pourtour de la glace 1. La zone périphérique 7 comprend un biseau 8 ou bord oblique sur la face latérale de la glace.

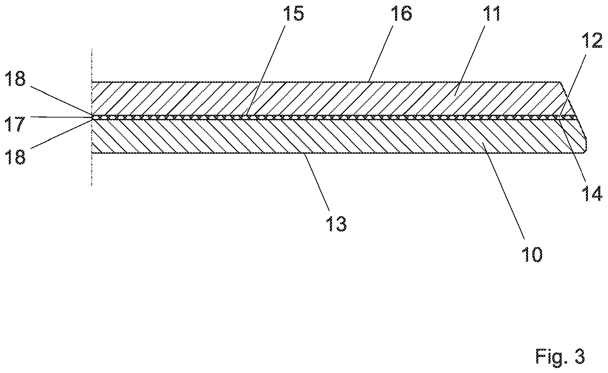

La glace 1 comprend un laminé 9 défini comme un empilement de plusieurs couches de matériau qui constitue l'épaisseur de la glace 1. Le laminé 9 comprend un premier substrat 10, un deuxième substrat 11, et une couche intermédiaire 12, comme représenté sur la figure 3.

Chaque substrat 10,11 comprend une face interne et une face externe :
- Le premier substrat comprend une face interne 13 et une face externe 14;
- Le deuxième substrat comprend une face interne 15 et une face externe 16 ;

Dans le mode de réalisation représenté sur les figures 1 à 4, le premier substrat 10 et le deuxième substrat 11 sont essentiellement constitués de saphir, le premier substrat 10 et le deuxième substrat 11 ayant la même composition.

Dans le mode de réalisation représenté sur les figures 1 à 4, la face externe du premier substrat 14 est positionnée au regard de la face interne du deuxième substrat 16 dans le laminé 9.

Le laminé 9 a une épaisseur de 2.3 mm, chacun des substrats 10, 11 ayant une épaisseur de 1.0 mm et la couche intermédiaire de 0.3 mm.

Dans un autre de mode de réalisation, le laminé 9 a une épaisseur de 2.50 mm, chacun des substrats 10, 11 ayant une épaisseur de 1.215 mm et la couche intermédiaire de 0.07 mm.

Dans un autre mode de réalisation, il est possible d'utiliser des substrats ayant une épaisseur comprise entre 0.5 mm et 0.9 mm, par exemple 0.7 mm, pour obtenir un laminé présentant une épaisseur totale de 1.5 mm.

La couche intermédiaire 12 est composée d'une feuille de support 17 en acrylate intercalée entre de deux feuilles adhésives 18 à base d'acrylate. Une feuille adhésive 18 est collée sur la face externe du premier substrat 14, et une feuille adhésive 18 est collée sur la face interne du deuxième substrat 15. La feuille de support 17 est collée entre les deux feuilles adhésives 18. Dans cet exemple, la couche intermédiaire est constituée par la feuille de support et les deux feuilles adhésives.

Dans un mode de réalisation non représenté, la couche intermédiaire 12 est constituée par une feuille d'adhésif, par exemple à base de résine époxy, de vinyle ou d'acrylate. La feuille d'adhésive peut être un film préparé en étalant une composition adhésive sur la face externe du premier substrat, par exemple une résine époxy de 0.07 mm d'épaisseur après étalement.

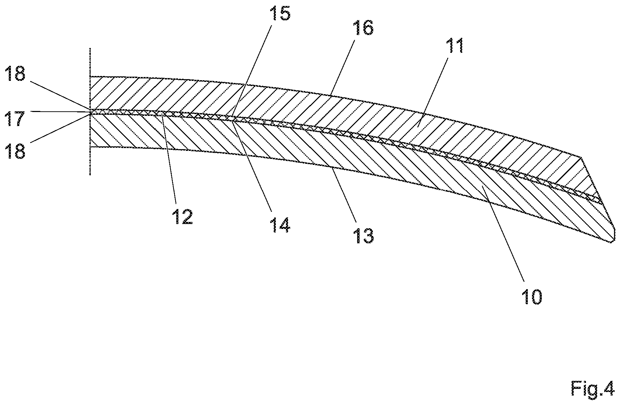

La figure 4 représente une coupe de la glace selon un axe reliant les deux bords droits 2. La glace 1 est bombée ou convexe, autrement dit la glace s'étend dans une direction perpendiculaire au plan (x,y) de la glace 1. Dans ce mode de réalisation, les faces internes 13,15 et externes 14,16 des premier et deuxième substrats 10,11 sont bombées. Dans des modes de réalisations non représentés, il est possible que seule la face externe du deuxième substrat 16 soit bombée ; ou la face externe du deuxième substrat 16 et la face interne du premier substrat 13.

Dans le mode de réalisation représenté sur les figures 1 à 4, la face externe du premier substrat 13 et la face interne du deuxième substrat 16 sont successivement polies et recouvertes d'un revêtement antireflet avant d'être recouvertes de la feuille adhésive 18.

### Numéros de référence employés sur les figures

- 1: Glace
- 2: Bord droit
- 3: Bord courbe
- 4: Face extérieure de la glace
- 5: Face intérieure de la glace
- 6: Zone centrale
- 7: Zone périphérique
- 8: Biseau
- 9: laminé
- 10: Premier substrat
- 11: Deuxième substrat
- 12: Couche intermédiaire
- 13: Face interne du premier substrat
- 14: Face externe du premier substrat
- 15: Face interne du deuxième substrat
- 16: Face externe du deuxième substrat
- 17: Feuille de support
- 18: Feuille adhésive

## Revendications

1. Glace de montre (1) destinée à être fixée sur une boîte de montre bracelet, la glace (1) comprenant un laminé (9) de matériau, ledit laminé (9) comprenant :
- un premier substrat (10) et un deuxième substrat (11), ledit premier substrat (10) et ledit deuxième substrat (11) étant à base d'oxyde d'aluminium sous forme cristalline, le deuxième substrat (11) étant superposé sur le premier substrat (10), le deuxième substrat (11) étant destiné à faire face au porteur de montre lorsque la glace (1) est montée dans une boite de montre ;
- une couche intermédiaire (12) logée entre ledit premier substrat (10) et ledit deuxième substrat (11), ladite couche intermédiaire (12) permettant de coller le premier substrat (10) sur le deuxième substrat (11).

2. Glace (1) selon la revendication 1, dans laquelle le premier substrat (10) et le deuxième substrat (11) sont majoritairement constitués d'oxyde d'aluminium sous forme cristalline, de préférence du saphir.

3. Glace (1) selon l'une des revendications 1 ou 2, dans laquelle la couche intermédiaire (12) comprend au moins une feuille de support (17), par exemple en vinyle, en acrylate.

4. Glace (1) selon l'une des revendications 1 à 3, dans laquelle la couche intermédiaire (12) comprend au moins une feuille d'adhésif (18), par exemple un adhésif à base de résine époxy, vinyle, ou acrylate.

5. Glace (1) selon l'une des revendications 1 à 4, dans laquelle la couche d'adhésif a une épaisseur comprise entre 0.01 mm et 0.30 mm, de préférence entre 0.15 mm et 0.30 mm pour une couche d'acrylate ou de vinyle, de préférence entre 0.05 mm et 0.15 mm pour une couche de résine époxy.

6. Glace (1) de montre selon l'une des revendications 1 à 5, dans laquelle au moins le deuxième substrat (11) est bombé de sorte que la glace (1) présente une face extérieure (4) bombée, de préférence le premier substrat (10) et le deuxième substrat (11) sont bombés.

7. Glace (1) selon l'une des revendications 1 à 6, dans laquelle le laminé (9) a une épaisseur comprise entre 1.5 mm et 5 mm, de préférence entre 1,6 mm et 5 mm, de préférence entre 2 mm et 2.5 mm.

8. Glace (1) selon l'une des revendications 1 à 7, dans laquelle la glace (1) a une largeur dans un plan (x,y) comprise entre 30 mm et 50 mm et une longueur dans un plan (x,y) comprise entre 30 mm et 50 mm.

9. Glace (1) selon l'une des revendications 1 à 8, dans laquelle le premier substrat (10) et/ou le deuxième substrat (11) a/ont une épaisseur comprise entre 0.4 mm et 2.5 mm, de préférence 0.7 et 2.5 mm, préférentiellement entre 0.5 mm et 0.9, ou entre 0.9 et 1.1 mm ou entre 1.1 mm et 1.3 mm.

10. Procédé pour fabriquer une glace de montre (1) destinée à être fixée sur une boite de montre, la glace (1) comprenant un laminé (9) de matériau comprenant un premier substrat (10) superposé sur un deuxième substrat (11), le procédé comprenant :
- i) Fournir un premier substrat (10) et un deuxième substrat (11), ledit premier substrat (10) et ledit deuxième substrat (11) étant à base d'oxyde d'aluminium sous forme cristalline, le deuxième substrat (11) étant superposé sur le premier substrat (10), le deuxième substrat (11) étant destiné à faire face au porteur de montre lorsque la glace (1) est montée dans une boite de montre ;
- ii) Coller le premier substrat (10) sur le deuxième substrat (11) en intercalant une couche intermédiaire (12) entre le premier substrat (10) et le deuxième substrat (10).

11. Procédé selon la revendication 10, dans lequel le premier substrat (10) et le deuxième substrat (11) comprennent chacun une face externe (14,16) et une face interne (13,15), la face externe du premier substrat (14) étant destiné à être positionnée au regard de la face interne du deuxième substrat (15) dans le laminé (9), et dans lequel le premier substrat (10) et le deuxième substrat (11) sont bombés, le procédé comprenant avant l'étape de collage :
- Ajuster la position du premier substrat (10) par rapport au deuxième substrat (11) de façon à ce que la face externe du premier substrat (14) s'emboite dans la face interne du deuxième substrat (15) ;

12. Procédé selon l'une des revendications 10 ou 11 dans lequel le premier substrat (10) et le deuxième substrat (11) comprennent chacun une face externe (14,16) et une face interne (13,15), la face externe du premier substrat (14) étant destiné à être positionnée au regard de la face interne du deuxième substrat (15) dans le laminé (9), le procédé comprenant, avant l'étape de collage, une étape de polissage comprenant:
- Polir les faces externes (14,16) et/ou internes (13,15) du premier substrat et/ou du deuxième substrat;

13. Procédé selon l'une des revendications 10 à 12 dans lequel le laminé est délimité par des faces latérales, le procédé comprend :
- une étape de retouche des faces latérales du laminé, par exemple une retouche du biseau d'une des faces latérales lorsqu'une des faces latérales comprend un biseau.

14. Boite de montre comprenant une glace (1) selon l'une des revendications 1 à 9.

15. Montre comprenant une glace de montre (1) selon l'une des revendications 1 à 9.

## Patentansprüche

1. Uhrenglas (1) zur Befestigung an einem Armbanduhrengehäuse, wobei das Glas (1) ein Materiallaminat (9) umfasst, das Laminat (9) umfassend:
- ein erstes Substrat (10) und ein zweites Substrat (11), wobei das erste Substrat (10) und das zweite Substrat (11) auf Aluminiumoxid in kristalliner Form basieren, wobei das zweite Substrat (11) dem ersten Substrat (10) überlagert ist, wobei das zweite Substrat (11) dazu bestimmt ist, dem Uhrenträger zugewandt zu sein, wenn das Glas (1) in einem Uhrengehäuse angebracht ist;
- eine Zwischenschicht (12), die zwischen dem ersten Substrat (10) und dem zweiten Substrat (11) aufgenommen ist, wobei es die Zwischenschicht (12) gestattet, das erste Substrat (10) auf das zweite Substrat (11) zu kleben.

2. Glas (1) nach Anspruch 1, wobei das erste Substrat (10) und das zweite Substrat (11) größtenteils aus Aluminiumoxid in kristalliner Form, vorzugsweise Saphir gebildet sind.

3. Glas (1) nach einem der Ansprüche 1 oder 2, wobei die Zwischenschicht (12) mindestens ein Trägerblatt (17) umfasst, zum Beispiel aus Vinyl, aus Acrylat.

4. Glas (1) nach einem der Ansprüche 1 bis 3, wobei die Zwischenschicht (12) mindestens ein Haftmittelblatt (18) umfasst, zum Beispiel ein Haftmittel auf Basis von Epoxidharz, Vinyl oder Acrylat.

5. Glas (1) nach einem der Ansprüche 1 bis 4, wobei die Haftmittelschicht eine Dicke zwischen 0,01 mm und 0,30 mm aufweist, vorzugsweise zwischen 0,15 mm und 0,30 mm für eine Acrylat- oder Vinylschicht, vorzugsweise zwischen 0,05 mm und 0,15 mm für eine Epoxidharzschicht.

6. Uhrenglas (1) nach einem der Ansprüche 1 bis 5, wobei wenigstens das zweite Substrat (11) so gewölbt ist, dass das Glas (1) eine gewölbte Außenseite (4) aufweist, wobei vorzugsweise das erste Substrat (10) und das zweite Substrat (11) gewölbt sind.

7. Glas (1) nach einem der Ansprüche 1 bis 6, wobei das Laminat (9) eine Dicke zwischen 1,5 mm und 5 mm, vorzugsweise zwischen 1,6 mm und 5 mm, vorzugsweise zwischen 2 mm und 2,5 mm aufweist.

8. Glas (1) nach einem der Ansprüche 1 bis 7, wobei das Glas (1) eine Breite in einer Ebene (x,y) zwischen 30 mm und 50 mm und eine Länge in einer Ebene (x,y) zwischen 30 mm und 50 mm aufweist.

9. Glas (1) nach einem der Ansprüche 1 bis 8, wobei das erste Substrat (10) und/oder das zweite Substrat (11) eine Dicke zwischen 0,4 mm und 2,5 mm, vorzugsweise 0,7 und 2,5 mm, vorzugsweise zwischen 0,5 mm und 0,9 oder zwischen 0,9 und 1,1 mm oder zwischen 1,1 mm und 1,3 mm aufweist/aufweisen.

10. Verfahren zur Herstellung eines Uhrenglases (1) zur Befestigung an einem Uhrengehäuse, wobei das Glas (1) ein Materiallaminat (9) umfasst, das ein erstes Substrat (10) umfasst, das einem zweiten Substrat (11) überlagert ist, das Verfahren umfassend:
- i) Bereitstellen eines ersten Substrats (10) und eines zweiten Substrats (11), wobei das erste Substrat (10) und das zweite Substrat (11) auf Aluminiumoxid in kristalliner Form basieren, wobei das zweite Substrat (11) dem ersten Substrat (10) überlagert ist, wobei das zweite Substrat (11) dazu bestimmt ist, dem Uhrenträger zugewandt zu sein, wenn das Glas (1) in einem Uhrengehäuse angebracht ist;
- ii) Kleben des ersten Substrats (10) auf das zweite Substrat (11), wobei eine Zwischenschicht (12) zwischen das erste Substrat (10) und das zweite Substrat (10) eingefügt wird.

11. Verfahren nach Anspruch 10, wobei das erste Substrat (10) und das zweite Substrat (11) jeweils eine Außenseite (14, 16) und eine Innenseite (13, 15) umfassen, wobei die Außenseite des ersten Substrats (14) dazu bestimmt ist, gegenüber der Innenseite des zweiten Substrats (15) im Laminat (9) positioniert zu sein, und wobei das erste Substrat (10) und das zweite Substrat (11) gewölbt sind, wobei das Verfahren vor dem Schritt des Klebens Folgendes umfasst:
- Anpassen der Position des ersten Substrats (10) bezogen auf das zweite Substrat (11), so dass die Außenseite des ersten Substrats (14) in die Innenseite des zweiten Substrats (15) eingefügt ist;

12. Verfahren nach einem der Ansprüche 10 oder 11, wobei das erste Substrat (10) und das zweite Substrat (11) jeweils eine Außenseite (14, 16) und eine Innenseite (13, 15) umfassen, wobei die Außenseite des ersten Substrats (14) dazu bestimmt ist, gegenüber der Innenseite des zweiten Substrats (15) im Laminat (9) positioniert zu sein, wobei das Verfahren vor dem Schritt des Klebens einen Schritt des Polierens umfasst, der Folgendes umfasst:
- Polieren der Außenseiten (14, 16) und/oder Innenseiten (13, 15) des ersten Substrats und/oder zweiten Substrats;

13. Verfahren nach einem der Ansprüche 10 bis 12, wobei das Laminat von Seitenflächen begrenzt ist, wobei das Verfahren Folgendes umfasst:
- einen Schritt des Nachbearbeitens der Seitenflächen des Laminats, zum Beispiel ein Nachbearbeiten der Schräge einer der Seitenflächen, wenn eine der Seitenflächen eine Schräge umfasst.

14. Uhrengehäuse umfassend ein Glas (1) nach einem der Ansprüche 1 bis 9.

15. Uhr umfassend ein Uhrenglas (1) nach einem der Ansprüche 1 bis 9.

## Claims

1. Watch glass (1) intended to be secured to a wristwatch case, the glass (1) comprising a laminate (9) of material, said laminate (9) comprising :
- a first substrate (10) and a second substrate (11), said first substrate (10) and said second substrate (11) being based on crystalline aluminum oxide, the second substrate (11) being superimposed on the first substrate (10), the second substrate (11) being intended to face the wearer of the watch when the glass (1) is mounted in a watch case;
- an intermediate layer (12) housed between said first substrate (10) and said second substrate (11), said intermediate layer (12) enabling the first substrate (10) to be bonded to the second substrate (11).

2. Glass (1) as claimed in claim 1, wherein the first substrate (10) and the second substrate (11) mainly consist of crystalline aluminum oxide, preferably sapphire.

3. Glass (1) as claimed in either of claims 1 or 2, wherein the intermediate layer (12) comprises at least one support sheet (17), made of vinyl or acrylate for example.

4. Glass (1) as claimed in any of claims 1 to 3, wherein the intermediate layer (12) comprises at least one adhesive sheet (18), for example an adhesive based on epoxy resin, vinyl or acrylate.

5. Glass (1) as claimed in any of claims 1 to 4, wherein the adhesive layer has a thickness of between 0.01 mm and 0.30 mm, preferably between 0.15 mm and 0.30 mm for an acrylate or vinyl layer, or preferably between 0.05 mm and 0.15 mm for an epoxy resin layer.

6. Watch glass (1) as claimed in any of claims 1 to 5, wherein at least the second substrate (11) is domed, so that the glass (1) has a domed outer face (4), and preferably the first (10) and the second (11) substrate are domed.

7. Glass (1) as claimed in any of claims 1 to 6, wherein the laminate (9) has a thickness of between 1.5 mm and 5 mm, preferably between 1.6 mm and 5 mm, or preferably between 2 mm and 2.5 mm.

8. Glass (1) as claimed in any of claims 1 to 7, wherein the glass (1) has a width in a plane (x, y) of between 30 mm and 50 mm, and a length in a plane (x, y) of between 30 mm and 50 mm.

9. Glass (1) as claimed in any of claims 1 to 8, wherein the first substrate (10) and/or the second substrate (11) has/have a thickness of between 0.4 mm and 2.5 mm, preferably between 0.7 and 2.5 mm, preferably between 0.5 mm and 0.9 mm, or between 0.9 and 1.1 mm or between 1.1 mm and 1.3 mm.

10. Method for manufacturing a watch glass (1) intended to be secured to a watch case, the glass (1) comprising a laminate (9) of material comprising a first substrate (10) superimposed on a second substrate (11), the method comprising :
- i) Providing a first substrate (10) and a second substrate (11), said first substrate (10) and said second substrate (11) being based on crystalline aluminum oxide, the second substrate (11) being superimposed on the first substrate (10), the second substrate (11) being intended to face the wearer of the watch when the glass (1) is mounted in a watch case;
- ii) Bonding the first substrate (10) to the second substrate (11) by interleaving an intermediate layer (12) between the first substrate (10) and the second substrate (10).

11. Method as claimed in claim 10, wherein the first (10) and the second (11) substrate each comprise an outer face (14, 16) and an inner face (13, 15), the outer face of the first substrate (14) being intended to be positioned facing the inner face of the second substrate (15) in the laminate (9), wherein the first (10) and the second (11) substrate are domed, the method comprising, before the bonding step:
- Adjusting the position of the first substrate (10) relative to the second substrate (11) so that the outer face of the first substrate (14) is fitted into the inner face of the second substrate (15).

12. Method as claimed in either of claims 10 or 11, wherein the first (10) and the second (11) substrate each comprise an outer face (14, 16) and an inner face (13, 15), the outer face of the first substrate (14) being intended to be positioned facing the inner face of the second substrate (15) in the laminate (9), the method comprising, before the bonding step, a polishing step comprising:
- Polishing the outer (14, 16) and/or inner faces (13, 15) of the first substrate and/or of the second substrate.

13. Method as claimed in any of claims 10 to 12, wherein the laminate is delimited by lateral faces, and the method comprises :
- a step of adjusting the lateral faces of the laminate, for example an adjustment of the chamfer of one of the lateral faces when one of the lateral faces comprises a chamfer.

14. Watch case comprising a glass (1) as claimed in any of claims 1 to 9.

15. Watch comprising a watch glass (1) as claimed in any of claims 1 to 9.
